(19) Europäisches Patentamt
European Patent Office
Office européen des brevets

(11) **EP 3 502 172 B1**

(12) **EUROPEAN PATENT SPECIFICATION**

(45) Date of publication and mention
of the grant of the patent:
**09.06.2021 Bulletin 2021/23**

(51) Int Cl.:
***C08J 5/18*** *(2006.01)*      ***H01G 4/18*** *(2006.01)*

(21) Application number: **17841407.4**

(22) Date of filing: **07.08.2017**

(86) International application number:
**PCT/JP2017/028571**

(87) International publication number:
**WO 2018/034182 (22.02.2018 Gazette 2018/08)**

(54) **POLYPROPYLENE FILM ROLL**

POLYPROPYLENFOLIENROLLE

ROULEAU DE FILM DE POLYPROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.08.2016 JP 2016160745**

(43) Date of publication of application:
**26.06.2019 Bulletin 2019/26**

(73) Proprietor: **Toray Industries, Inc.
Tokyo 103-8666 (JP)**

(72) Inventors:
• **TSUGANE, Kazuhei**
**Tsuchiura-shi**
**Ibaraki 300-0015 (JP)**
• **FUJIMOTO, Soichi**
**Tsuchiura-shi**
**Ibaraki 300-0015 (JP)**
• **ASANO, Tetsuya**
**Tsuchiura-shi**
**Ibaraki 300-0015 (JP)**

(74) Representative: **Hoefer & Partner Patentanwälte
mbB
Pilgersheimer Straße 20
81543 München (DE)**

(56) References cited:
**JP-A- H1 159 986      JP-A- H04 232 254
JP-A- 2003 146 496      JP-A- 2003 192 203
JP-A- 2006 273 997      JP-A- 2015 195 367
JP-A- 2018 028 074      JP-A- 2018 028 075**

**Description**

TECHNICAL FIELD

The present invention relates to a polypropylene film roll, more specifically, a polypropylene film roll which can prevent troubles in a vapor deposition process in use for a capacitor, especially in preparation of a vapor-deposited capacitor, and which shows excellent processability in production of capacitors.

BACKGROUND ART

Since polypropylene films have excellent transparency, mechanical properties, electric properties, and the like, they are used for a variety of uses such as uses for wrappings, uses for tapes, and electric uses including cable wrappings and capacitors.

In particular, among the uses for capacitors, they are especially preferably used for high-voltage capacitors for either direct current or alternating current uses because of their excellent voltage withstanding properties and low-loss properties. In recent years, various types of electric equipment are becoming inverter-controlled, and this is placing increasing demands for smaller capacitors with increased capacities. Due to such demands in the market, especially due to demands in automobile uses (including hybrid car uses) and in photovoltaic power generation and wind power generation uses, it is becoming indispensable to improve voltage withstanding properties of polypropylene films, and to thin the films while maintaining their productivity and processability.

Moreover, due to the recent development of electronic devices and their compaction, there is an increasing demand for inexpensively obtaining film capacitors having large capacities comparable to those of electrolytic capacitors. For realization of a film capacitor with an increased capacity, production of a thinner dielectric film having a larger area is necessary, and this requires a technology which enables production, with high productivity, of a film thinner than conventional films, and processing of a capacitor with higher processability. Furthermore, as a result of widening and lengthening of the film roll from the viewpoint of cost reduction, various problems have occurred in the capacitor production process, especially under vacuum deposition, and these problems include winding displacement during unwinding of the film from the film roll, meandering of the film between rollers during running, wrinkles, and low margin accuracy, which have resulted in a remarkable decrease in the yield of the final product. In particular, occurrence of winding displacement and formation of wrinkles in the film roll during vacuum deposition have been major problems.

These are caused by environmental changes during the raw sheet (film roll before vapor deposition) production process and the vapor deposition process. More specifically, in the raw sheet production process, the production proceeds under an atmospheric pressure of 1 atm, so that the product roll includes an air of 1 atm therein. Exposure of the roll to a reduced-pressure atmosphere in a vapor deposition chamber causes inflation of the air, causing expansion of the gaps between the film layers, which leads to instability of the balance with the winding tension of the film, resulting in the meandering of the film during unwinding and the formation of wrinkles. This air expansion force corresponds to the difference in the pressure relative to the outside pressure, that is, a pressure difference of about 1 atm. When this expansion force causes disruption of the balance with the winding tension of the film in the processing apparatus to cause mechanical deviation of the film in the transverse direction, the phenomena of meandering of the film and formation of wrinkles may occur, leading, in severe cases, to failure in the vapor deposition process and a remarkable decrease in the quality of the vapor-deposited product due to the wrinkles.

PRIOR ART DOCUMENTS

[Patent Documents]

In order to solve the above problems, setting of the hardness of the inner layer of the polypropylene film roll within a particular range (for example, Patent Document 1) has been proposed. Setting of the roll diameter in the transverse direction within a particular range (for example, Patent Document 2) has also been proposed.

[Patent Document 1] JP 2006-273997 A
[Patent Document 2] JP 2015-195367 A

SUMMARY OF THE INVENTION

PROBLEMS TO BE SOLVED BY THE INVENTION

However, the proposals in Patent Document 1 and Patent Document 2 failed to solve the hardness difference in the transverse direction of the film during the capacitor production process, vapor deposition process, and the like, in which highly accurate feeding has been demanded in recent years. Therefore, the problems such as meandering of the film and wrinkle formation during conveyance have not been solved.

Moreover, a vapor-deposited film has a number of vapor-deposited lanes separated by non-vapor-deposited portions called margins, and the widths of the margin portions (non-vapor-deposited portions) are remarkably decreasing in recent years, so that accuracy of these portions has become a key factor for the quality level of the vapor-deposited product. Since these margins are formed by partially preventing vapor deposition using a tape, oil, or the like (margin-forming material), the resulting margins show no variation or poor formation as long as the film subjected to the vapor deposition or the margin-forming material does not show variation or formation failure in the vaporization process (in the vapor deposition apparatus). However, in order to form the above-described highly accurate margins, highly accurate feeding and winding are required, and therefore small variations (meandering and wrinkles) in the film during unwinding may cause a problem. When a capacitor is produced by vapor deposition, slitting, and then winding or laminating, formation of a normal electrode having a designed capacity requires winding into a reel having an accurate vapor deposition width and margin width. For this, achievement of the above-described margin accuracy is very important.

An object of the present invention is to solve the problems described above. More specifically, the present invention aims to provide a polypropylene film roll which can prevent troubles in preparation of a vapor-deposited capacitor, such as winding displacement or longitudinal wrinkles in the film roll during the vapor deposition process, or meandering during conveyance, and which shows excellent processability in production of capacitors.

MEANS FOR SOLVING THE PROBLEMS

In order to solve the above-described problems, the polypropylene film roll of the present invention has the following configuration. That is, the polypropylene film roll is

a film roll comprising a polypropylene film wound around a core, the film roll having a roll outermost layer having an average hardness of 84.0 to 94.0°, the roll outermost layer having a variation of hardness within $\pm 2.0°$ in the transverse direction.

In the polypropylene film roll of the present invention, at least one side of the polypropylene film preferably has a maximum peak height SRp of 0.4 to 2.0 $\mu$m.

In the polypropylene film roll of the present invention, when the distance from the roll outermost layer to the core in the diameter direction is L, and when the average hardnesses in the roll transverse direction at distances from the roll outermost layer of 0, L/5, 2L/5, 3L/5, and 4L/5 are H(0), H(L/5), H(2L/5), H(3L/5), and H(4L/5), respectively, Formulae (1) to (4):

$$1.00 < H(L/5)/H(0) \leq 1.02 \qquad \text{Formula (1);}$$

$$1.00 < H(2L/5)/H(L/5) \leq 1.02 \qquad \text{Formula (2);}$$

$$1.00 < H(3L/5)/H(2L/5) \leq 1.02 \qquad \text{Formula (3);}$$

and

$$1.00 < H(4L/5)/H(3L/5) \leq 1.02 \qquad \text{Formula (4);}$$

are preferably satisfied; and the variations of hardness in the transverse direction at the sites of L/5, 2L/5, 3L/5, and 4L/5 from the roll outermost layer are preferably within $\pm 2.0°$.

In the polypropylene film roll of the present invention, the distance from the roll outermost layer to the core in the diameter direction, L, is preferably 20 to 300 mm.

In the polypropylene film roll of the present invention, the polypropylene film preferably has heat shrinkage rates of 0.4 to 2.0% in the longitudinal direction and - 0.5 to 0.5% in the transverse direction at 80°C.

The polypropylene film roll of the present invention preferably has an air leakage index of 100 to 1,500 seconds when one side is layered on the other side.

The polypropylene film roll of the present invention preferably has an air content of 0.1 to 8.0%.

In the polypropylene film roll of the present invention, at least one surface of the polypropylene film preferably has a surface roughness (central surface average roughness), SRa, of 0.01 to 0.05 $\mu$m.

The polypropylene film roll of the present invention preferably has a film thickness of 0.5 to 7.0 $\mu$m according to the micrometer method.

The polypropylene film roll of the present invention preferably has a film length of not less than 20,000 m.

The polypropylene film roll of the present invention preferably has a film width of 500 mm to 1,050 mm.

The polypropylene film roll of the present invention is preferably to be used for a capacitor.

EFFECT OF THE INVENTION

When the polypropylene film roll of the present invention is used as a dielectric body for a capacitor, not only excellent processability, but also excellent voltage withstanding properties can be achieved in the vapor deposition process and the capacitor production process, so that the polypropylene film roll can be favorably used as the dielectric body for a capacitor.

MODE FOR CARRYING OUT THE INVENTION

The polypropylene film roll of the present invention is described below in more detail.

The polypropylene film roll of the present invention preferably contains a polypropylene resin as a major component. The polypropylene resin may also contain the later-mentioned copolymer or branched polypropylene. The "major component" in the present invention means that the ratio of a particular component in the total components is not less than 50% by mass, more preferably not less than 80% by mass, still more preferably not less than 90% by mass, especially preferably not less than 95% by mass. Examples of the components other than the polypropylene resin include the later-mentioned additives such as antioxidants and lubricants.

The polypropylene resin may be mainly a homopolymer of propylene. As long as the object of the present invention is not deteriorated, a polypropylene copolymer prepared by copolymerization with another unsaturated hydrocarbon may be used, or a blended product of a propylene homopolymer and another polymer may be used. Examples of the copolymer component of the polypropylene copolymer include ethylene, 1-butene, 1-pentene, 3-methylpentene-1, 3-methylbutene-1, 1-hexene, 4-methylpentene-1, 5-ethylhexene-1, 1-octene, 1-decene, 1-dodecene, 1-tetradecene, 1-hexadecene, 1-heptadecene, 1-octadecene, 1-eicosene, vinylcyclohexene, styrene, allylbenzene, cyclopentene, norbornene, and 5-methyl-2-norbornene. Examples of the other polymer to be blended include homopolymers of unsaturated hydrocarbons other than propylene, and copolymers of unsaturated hydrocarbons containing propylene. From the viewpoint of voltage withstanding properties and dimensional stability, the amount of copolymerization is preferably less than 1 mol%. The blending amount is preferably less than 20% by weight.

In the polypropylene resin constituting the polypropylene film of the present invention, the cold xylene-soluble portion (hereinafter referred to as CXS) is preferably not more than 5% by mass. The CXS herein means the polypropylene component dissolved in xylene when the film is completely dissolved in xylene at 135°C and then precipitation is allowed at 20°C. The CXS is thought to correspond to a component which is hardly crystallizable because of its low stereoregularity, low molecular weight, and the like. The CXS of the polypropylene resin is more preferably not more than 5% by mass, still more preferably not more than 3% by mass, especially preferably not more than 1% by mass. In cases where the CXS exceeds 5% by mass, the polypropylene film may have poor voltage withstanding properties and poor dimensional stability. In order to set the CXS of the polypropylene resin within the above-described range, a method in which the catalytic activity for obtaining the resin is increased, a method in which the obtained resin is washed with a solvent or propylene monomers themselves, or the like may be employed.

The polypropylene resin constituting the polypropylene film of the present invention has a mesopentad fraction of preferably not less than 95%, more preferably not less than 97%, from the viewpoint of heat shrinkage properties at high temperature. The mesopentad fraction is an index indicating the stereoregularity of the crystalline phase of the polypropylene resin as measured by the nuclear magnetic resonance method (NMR method). As this value increases, the degree of crystallinity increases, and the melting point increases, which is preferred especially from the viewpoint of vapor deposition processability at high temperature. In order to obtain a resin having such a high stereoregularity, a method in which a solvent such as n-heptane is used for washing the resin powder obtained; a method in which the catalyst and/or the promoter is/are appropriately selected, and/or the composition is appropriately selected; or the like; is preferably employed. In cases where the mesopentad fraction is within the above-described preferred range, excellent voltage withstanding properties and excellent dimensional stability can be achieved.

The melt flow index (melt flow rate: MFR) (hereinafter referred to as MFR; unit, g/10 minutes) of the polypropylene resin constituting the polypropylene film of the present invention as measured according to the conditions M (230°C, 2.16 kg) of JIS K 7210 (1995) is preferably 1.0 to 10 g/10 minutes, more preferably 1.5 to 8 g/10 minutes, still more preferably 2.0 to 5 g/10 minutes. In cases where the MFR of the polypropylene resin is within the above-described preferred range, excellent film-forming properties can be achieved, and the polypropylene film can be stably obtained, while excellent voltage withstanding properties can be achieved. In order to set the MFR of the polypropylene resin within the above-described range, a method in which the average molecular weight and/or the molecular weight distribution is/are controlled may be preferably employed.

The polypropylene film roll of the present invention is a film roll containing the polypropylene film wound around a core. The core (cylindrical core) used for the film roll of the present invention is preferably made of a plastic hardly showing deformation, made of a fiber-reinforced plastic, or made of a metal. From the viewpoint of the strength, a fiber-reinforced plastic is more preferably used. Examples of the fiber-reinforced plastic core include a core of a resin-impregnated type which is prepared by winding carbon fibers or glass fibers into a cylindrical shape, impregnating the fibers with a thermosetting resin such as an unsaturated polyester resin, and then curing the resin.

In the polypropylene film roll of the present invention, the roll outermost layer has an average hardness of 84.0 to 94.0°. The average hardness is more preferably 86.0 to 92.0°, still more preferably 88.0 to 90.0°. In cases where the average hardness of the roll outermost layer is less than 84.0°, the roll is too soft, and winding collapse may occur during transportation or the like. In cases where the average hardness exceeds 94.0°, the hardness of the winding causes blocking between film layers during unwinding, which leads to instable film detachment during the unwinding and hence to film breakage in some cases. An average hardness of the roll outermost layer within the above-described range can be achieved by using the above-mentioned polypropylene resin and, as mentioned below, setting the cooling drum conditions and the stretching conditions during the film formation to particular conditions to control the film surface state, and setting the slit conditions to particular conditions.

In the polypropylene film roll of the present invention, the roll outermost layer has a variation of hardness within ±2.0°. The variation of hardness is more preferably within ±1.5°, still more preferably within ±1.0°. In cases where the variation of hardness of the roll outermost layer exceeds ±2.0°, expansion of air occurs in the processing apparatus during the vapor deposition to expand the interlayer gaps. This may lead to instability of the balance with the winding tension of the film in the transverse direction to cause mechanical deviation of the film in the transverse direction, resulting in the phenomena of meandering of the film and formation of wrinkles to cause an increase in the defective product rate in some cases. A variation of hardness of the roll outermost layer within ±2.0° can be achieved by using the above-mentioned polypropylene resin and, as mentioned below, setting the cooling drum conditions and the stretching conditions during the film formation to particular conditions to control the film surface state, and setting the slit conditions to particular conditions.

In the polypropylene film roll of the present invention, at least one side of the polypropylene film preferably has a maximum peak height SRp of 0.4 to 2.0 $\mu$m. The maximum peak height is more preferably 0.5 to 1.7 $\mu$m, still more preferably 0.6 to 1.4 $\mu$m. In cases where the maximum peak height SRp is within the preferred range described above, an appropriate air content can be maintained, and blocking, winding displacement, and meandering are less likely to occur since the surface is a non-smooth surface. On the other hand, even when the inner portion of the film is tightly wound after the winding due to the pressure applied to the film, formation of small irregularities due to transfer by film contact can be avoided because of the absence of rough protrusions. Moreover, since the actual thickness does not become too thin, deterioration of the voltage withstanding properties does not occur. In cases where a maximum peak height SRp within the above-described range is achieved on at least one side, an appropriate air content can be maintained, leading to improved processability. In particular, in cases where the maximum peak height SRp falls within the above-described range on both sides, favorable slipping properties for the conveying roll can be achieved, resulting in excellent processability, which is more preferred. A maximum peak height SRp within the range of 0.4 to 2.0 $\mu$m can be achieved by using the above-mentioned polypropylene resin and, as mentioned below, performing the longitudinal stretching process and the transverse stretching process during the film formation under particular conditions.

In the polypropylene film roll of the present invention, when the distance from the roll outermost layer to the core in the diameter direction is L, and when the average hardnesses in the roll transverse direction at distances from the roll outermost layer of 0, L/5, 2L/5, 3L/5, and 4L/5 are H(0), H(L/5), H(2L/5), H(3L/5), and H(4L/5), respectively, the following formulae are preferably satisfied.

$$1.00 < H(L/5)/H(0) \leq 1.02$$

$$1.00 < H(2L/5)/H(L/5) \leq 1.02$$

$$1.00 < H(3L/5)/H(2L/5) \leq 1.02$$

$$1.00 < H(4L/5)/H(3L/5) \leq 1.02$$

The following formulae are more preferably satisfied.

$$1.00 < H(L/5)/H(0) \le 1.01$$

$$1.00 < H(2L/5)/H(L/5) \le 1.01$$

$$1.00 < H(3L/5)/H(2L/5) \le 1.01$$

$$1.00 < H(4L/5)/H(3L/5) \le 1.01$$

In cases where the formulae H(L/5)/H(0), H(2L/5)/H(L/5), H(3L/5)/H(2L/5), and H(4L/5)/H(3L/5) are within the preferred ranges described above, the hardness of the outer layer does not exceed the hardness of the inner layer, so that deformation of the inner layer film due to collapse does not occur, and no wrinkle formation occurs in the inner portion. Moreover, since the tight winding pressure from the outer layer applied to the inner layer does not become too high, deformation of the inner layer film due to collapse does not occur. On the other hand, since the hardness of the inner layer does not become high, wrinkles and sagging are less likely to occur in the inner layer, so that excellent processability can be achieved. Values within the above-described ranges can be achieved by using the above-mentioned polypropylene resin and, as mentioned below, performing the slit process during the film formation under particular conditions.

In the polypropylene film roll of the present invention, the variation of hardness in the transverse direction at each of the sites of L/5, 2L/5, 3L/5, and 4L/5 from the roll outermost layer is preferably within $\pm 2.0°$. The variation of hardness is more preferably within $\pm 1.5°$, still more preferably within $\pm 1.0°$. In cases where the variation in the transverse direction at each of the sites of L/5, 2L/5, 3L/5, and 4L/5 from the roll outermost layer is within the above-described preferred range, disruption of the balance in the processing apparatus is less likely to occur during the vapor deposition, so that mechanical deviation of the film in the transverse direction is less likely to occur, and meandering of the film and formation of wrinkles do not occur. Thus, there is no increase in the defective product rate. A variation of hardness in the transverse direction within the above-described range can be achieved by using the above-mentioned polypropylene resin and, as mentioned below, performing the longitudinal stretching process, transverse stretching process, and slitting under particular conditions during the film formation.

In the polypropylene film roll of the present invention, the distance from the roll outermost layer to the core in the diameter direction, L, preferably satisfies 20 to 300 mm from the viewpoint of the demand and the productivity of the capacitor. The distance L more preferably satisfies 50 to 280 mm, still more preferably satisfies 90 to 240 mm.

In the polypropylene film of the present invention, the heat shrinkage rate in the longitudinal direction (the direction in which the film flows during the film formation) under treatment conditions at 80°C for 15 minutes is preferably 0.4 to 2.0%. The heat shrinkage rate in the longitudinal direction is more preferably 0.5 to 1.5%. The heat shrinkage rate at 80°C is associated with film shrinkage after winding. In cases where the heat shrinkage rate in the longitudinal direction is within the above-described preferred range, winding does not occur too tightly, so that wrinkles and sagging are less likely to occur. On the other hand, because of the appropriate tightness of the winding, favorable air passing through the film layers can be achieved, so that meandering of the film is less likely to occur during the vapor deposition process. The heat shrinkage rate in the transverse direction (the direction perpendicular to the longitudinal direction on the film plane) is preferably - 0.5 to 0.5%. The heat shrinkage rate in the transverse direction is more preferably - 0.4 to 0.4%. In cases where the heat shrinkage rate in the transverse direction is within the above-described preferred range, unevenness of the film-end face in the transverse direction is less likely to occur after the winding, and film breakage is less likely to occur during the vapor deposition process. Under treatment conditions at 80°C for 15 minutes, heat shrinkage rates in the longitudinal direction and the transverse direction within the above-described ranges can both be achieved by using the above-mentioned polypropylene resin and, as mentioned below, performing the transverse stretching process during the film formation under particular conditions.

The polypropylene film of the present invention preferably has an air leakage index of 100 to 1,500 seconds when one side is layered on the surface in the other side. The air leakage index is more preferably 200 to 900 seconds. In cases where the air leakage index of the film is within the above-described preferred range, the film layers are in appropriate contact with each other, and transfer of protrusions and wrinkle formation are less likely to occur during the winding. On the other hand, since the air included between the film layers can be eliminated, winding displacement is less likely to occur during the winding. An air leakage index within the above-described range can be achieved by using the above-mentioned polypropylene resin and, as mentioned below, setting the cooling drum conditions and the stretching conditions during the film formation to particular conditions to control the film surface state.

From the viewpoint of preventing winding displacement and improving the margin accuracy, the air content is preferably 0.1 to 8.0%, more preferably 1.0 to 3.0%. In cases where the air content is within the above-described preferred range, the film roll can have an appropriate surface layer hardness, and blocking between film layers is less likely to occur during the unwinding, so that stable film detachment can be achieved during the unwinding. Therefore, film breakage is less likely to occur. On the other hand, since the amount of air between the film layers is appropriate, problems such as winding displacement during vacuum deposition, meandering during running, wrinkles, and low margin accuracy are less likely to occur.

The surface roughness SRa of the polypropylene film of the present invention is preferably 0.01 to 0.05 μm, more preferably 0.02 to 0.04 μm in at least one surface. In cases where the film surface roughness SRa is within the above-described preferred range, the air content can be appropriately controlled when a film roll is prepared, so that deterioration of vapor deposition processability such as winding displacement or meandering is less likely to occur. Further, there is no risk of occurrence of defects such as wrinkles during processing of the element, and there is no risk of causing a decrease in the voltage withstanding properties. On the other hand, since the film surface can have an appropriate level of irregularities, favorable slipping properties can be achieved, so that, in the film formation process and the vapor deposition process, wrinkle formation during conveyance is less likely to occur, and winding displacement is less likely to occur. In cases where the above-described film surface roughness SRa is satisfied on at least one side, an appropriate air content can be maintained, leading to improved processability. In particular, in cases where the film surface roughness SRa falls within the above-described range on both sides, favorable slipping properties for the conveying roll can be achieved, resulting in excellent processability, which is more preferred.

The polypropylene film of the present invention preferably has a film thickness of 0.5 to 7.0 μm. The film thickness is more preferably 0.8 to 6.8 μm, still more preferably 1.2 to 6.5 μm. In cases where the film thickness is within the above-described preferred range, excellent mechanical strength and voltage withstanding properties can be achieved, and film breakage is less likely to occur during the film formation and processing. On the other hand, the capacity per volume is less likely to decrease when it is used as a dielectric body for a capacitor. A film thickness within the above-described range can be appropriately set by controlling the amount of discharge of the resin during the formation of the sheet, or controlling the draft ratio. Since film breakage during the film formation occurs more easily as the film thickness decreases, stable film formation can be achieved by using the above-mentioned polypropylene resin and, as mentioned below, performing the casting process, longitudinal stretching process, and transverse stretching process during the film formation under particular conditions.

In the present invention, the film roll width (the width of the polypropylene film) is preferably 500 mm to 1,050 mm from the viewpoint of the demand and the productivity of the capacitor. The film roll width is more preferably 600 mm to 950 mm, still more preferably 620 mm to 820 mm from the viewpoint of further improvement of the capacitor productivity. In cases where the film roll width is within the above-described preferred range, a favorable productivity can be achieved even taking the difficulty in the winding technique into account, while an excellent vapor deposition efficiency and a favorable productivity can be achieved.

From the viewpoint of improving the efficiency of the vapor deposition process and increasing the productivity to reduce the cost, the film length is not less than 20,000 m, preferably not less than 30,000 m. From the viewpoint of the productivity, and taking the difficulty of the winding technique into account, the film length is more preferably not less than 30,000 m and less than 80,000 m. In cases where the film length is within the above-described preferred range, an appropriate weight can be achieved, so that the film can be easily handled, and an appropriate winding tightness can be achieved. Therefore, defects such as wrinkles and sagging are less likely to occur during the processing, and the productivity is not deteriorated.

The polypropylene film of the present invention may contain a branched polypropylene for the purpose of improving film-forming properties. In such a case, the branched polypropylene is preferably a branched polypropylene which satisfies the relation log (MS) > -0.56 log (MFR) + 0.74, wherein (MS) is the melt tension and (MFR) is the melt flow index (melt flow rate: MFR) as measured at 230°C. Here, the unit of the melt tension (MS) is cN. Examples of the method preferably used for obtaining a branched polypropylene which satisfies the relation log (MS) > - 0.56 log (MFR) + 0.74, wherein (MS) is the melt tension and (MFR) is the melt flow index (melt flow rate: MFR) as measured at 230°C, include a method in which a polypropylene containing a large amount of macromolecular component is blended, a method in which an oligomer or a polymer having a branched structure is blended, a method in which a long-chain branched structure is introduced to a polypropylene molecule as described in JP 62-121704 A, and a method described in JP 2869606 B. More specifically, examples of the method include use of "PRO-FAX" (registered trademark) PF-814, manufactured by LyondellBasell, or "Daploy" (registered trademark) HMS-PP (e.g., WB130HMS or WB135HMS), manufactured by Borealis. In particular, resins obtained by the electron beam crosslinking method are preferably used since the amount of gel component is small in these resins. The branched polypropylene herein means a polypropylene having internally 3-substituted olefins at not more than five sites per 10,000 carbon atoms. The presence of the internally 3-substituted olefins can be confirmed based on the proton ratio in the $^{1}$H-NMR spectrum. The branched polypropylene, while having an action as an $\alpha$-crystal nucleating agent, is capable of forming a rough surface due to its crystalline form when its amount added is within a certain range. More specifically, the spherulite size of the polypropylene produced by the cooling process of the melt-extruded resin sheet can be reduced, and generation of insulation defects during the stretching process can be suppressed, so that a polypropylene film having excellent voltage withstanding properties can be obtained.

In cases where a branched polypropylene is included in the polypropylene film of the present invention, its content is preferably 0.05 to 3.0% by mass, more preferably 0.1 to 2.0% by mass, still more preferably 0.3 to 1.5% by mass, especially preferably 0.5 to 1.0% by mass. In cases where the content of the branched polypropylene is within the above-described preferred range, an effect that improves the film-forming properties can be obtained, while the stereoregularity as a polypropylene film is not deteriorated, so that excellent voltage withstanding properties can be achieved.

The polypropylene resin constituting the polypropylene film of the present invention may preferably contain various additives as long as the object of the present invention is not deteriorated. Examples of such additives include crystalline nuclei, antioxidants, heat stabilizers, lubricants, antistatic agents, antiblocking agents, fillers, viscosity modifiers, and anti-coloring agents.

Among the additives described above, selection of the types of the antioxidants and their amounts added are important from the viewpoint of long-term heat resistance. That is, the antioxidants are preferably phenol-based antioxidants having sterical hindrance, wherein at least one of them is preferably of a high-molecular-weight type having a molecular weight of not less than 500. More specifically, it is preferred to use one of, or a combination of, for example, 2,6-di-t-butyl-p-cresol (BHT: molecular weight 220.4), 1,3,5-trimethyl-2,4,6-tris(3,5-di-t-butyl-4-hydroxybenzyl)benzene (for example, "Irganox" (registered trademark) 1330: molecular weight 775.2, manufactured by BASF), and tetrakis[methylene-3(3,5-di-t-butyl-4-hydroxyphenyl)propionate]methane (for example, "Irganox" (registered trademark) 1010: molecular weight 1,177.7, manufactured by BASF). The total content of these antioxidants is preferably 0.03 to 1.0% by mass, more preferably 0.1 to 0.9% by mass with respect to the total amount of the polypropylene resin. While the content of the antioxidants in the polypropylene resin is excellent, excellent voltage withstanding properties can be achieved at high temperature.

In the polypropylene film of the present invention, the surface wetting tension in at least one side is preferably 37 to 50 mN/m, more preferably 38 to 49 mN/m, still more preferably 39 to 48 mN/m, especially preferably 40 to 47 mN/m. In cases where the surface wetting tension is not less than the preferred lower limit described above, sufficient adhesion to the metal can be achieved in metal vapor deposition.

The production method for the polypropylene film roll of the present invention is described below, but the method is not necessarily limited thereto.

First, the above-described preferred polypropylene resin is supplied to a single-screw melt extruder, and then extruded through a slit-shaped mouthpiece at a temperature of 230 to 260°C, followed by allowing solidification on a cooling drum to obtain an unoriented sheet. Here, for obtaining the film of the present invention, it is preferred to appropriately perform temperature control of the cooling drum for the purpose of appropriately generating $\beta$-crystals. For efficient generation of $\beta$-crystals, it is preferred to keep a resin temperature that maximizes the generation efficiency of the $\beta$-crystals for a predetermined period. This temperature is usually 115 to 135°C. The retention time is preferably not less than 1.5 seconds. For realization of such conditions, the process may be determined depending on, for example, the resin temperature, the extrusion amount, and the receiving rate. From the viewpoint of the productivity, since the diameter of the cooling drum largely influences the retention time, the diameter of the drum is preferably not less than 1 m. The cooling drum temperature to be selected may be arbitrary to some extent since other factors have influence as described above. However, the cooling drum temperature is preferably 70 to 130°C, more preferably within the range of 90 to 110°C. In cases where the cooling drum temperature is within the above-described preferred range, crystallization of the film does not proceed too much. Therefore, orientation can be easily achieved in a later process; voids are less likely to be formed in the film; and dielectric breakdown resistance properties are not deteriorated. The method for adhesion to the cooling drum may be, for example, any of the electrostatic voltage application method, adhesion method utilizing the surface tension of water, air-knife method, press roll method, and underwater casting method. The air-knife method is preferred from the viewpoint of achieving favorable flatness, and control of the heat shrinkage properties and the surface roughness on both sides.

Subsequently, the obtained unstretched sheet is biaxially stretched to allow biaxial orientation. More specifically, the stretching conditions are as follows. First, the temperature for longitudinal stretching of the unstretched sheet is controlled. Examples of the temperature control method include a method using a temperature-controlled rolling roll, and a method using a hot air oven. For preheating, an unoriented film is first passed through a roll whose temperature is kept at 100 to 150°C. The sheet is then kept at a temperature of 110°C to 150°C. In this case, 3-to 7-fold orientation is allowed in terms of the stretch ratio in the longitudinal direction, and then the film is cooled to room temperature by passing through a cooling roll at 10 to 40°C.

After the longitudinal stretching and cooling, radiation heaters are placed in both sides in front of the entrance of a tenter stretching machine, and heat is locally applied to control the film surface structure. From the viewpoint of controlling the film maximum peak height within an appropriate range, and achieving uniform roughness in the transverse direction, the distance between each radiation heater and the film is preferably 5 to 10 mm, more preferably 6 to 8 mm. In cases where the distance between the radiation heater and the film is within the above-described preferred range, the radiation heater is less likely to contact the film, and heat required for the film surface control can be sufficiently supplied. The output of the radiation heater is preferably 6 to 10 kW, more preferably 7 to 9 kW. In cases where the output of the radiation heater is within the above-described preferred range, heat required for the film surface control can be sufficiently supplied, while the heat is less likely to become excessive; the maximum peak height can be set within the appropriate range; and film breakage due to excessive heat is less likely to occur.

Subsequently, the film is gripped at its ends, and introduced into the tenter stretching machine. Stretching is carried out in the transverse direction 7- to 14-fold, more preferably 9- to 13-fold, still more preferably 10- to 13-fold by heating at preferably 150 to 170°C, more preferably 153 to 168°C, still more preferably 155 to 165°C. Subsequently, heat setting is preferably carried out at a temperature of 140 to 160°C. The temperature is preferably 147 to 160°C, more preferably 150 to 160°C. The heat treatment may be carried out while the film is relaxed in the longitudinal direction and/or transverse direction. The relaxing is preferably carried out at a relaxing rate in the transverse direction of 10 to 20%.

Subsequently, the film is cooled in a cooling room. From the viewpoint of preventing uneven thickness in the transverse direction and achieving heat dimensional stability, the cooling room is preferably separated into three rooms. When the separated cooling rooms are referred to as cooling rooms 1, 2, and 3, respectively, the cooling room temperature of cooling room 1 is preferably kept at 110 to 130°C for not less than 0.5 seconds; the cooling room temperature of cooling room 2 is preferably kept at 80 to 100°C for not less than 0.5 seconds; and the cooling room temperature of cooling room 3 is preferably kept at 50 to 70°C for not less than 0.5 seconds. The retention time in each of cooling rooms 1, 2, and 3 is more preferably not less than 1.0 second. In cases where the retention time is not less than the above-described preferred lower limit, rapid cooling is less likely to occur, so that unevenness of the thickness in the transverse direction can be suppressed, and favorable heat dimensional stability can be achieved.

Subsequently, from the viewpoint of achieving better adhesion of the vapor-deposited metal on the side to be subjected to the vapor deposition, the biaxially stretched polypropylene film is subjected to corona discharge treatment in air, in nitrogen, in carbon dioxide gas, or in a mixed gas thereof, at a treatment intensity of 20 to 30 W·min/m$^2$ to give adhesiveness of the vapor-deposited metal.

Subsequently, the film roll is subjected to a slit process to adjust its width to a predetermined width, and wound around a core. Slit conditions of the film as well as the above-described control of the maximum peak height are important, and, in the slit conditions, the unwinding tension is preferably 2.0 to 8.0 kg/m. The winding tension is preferably 1.0 to 8.0 kg/m, more preferably 2.0 to 7.5 kg/m, still more preferably 3.0 to 7.0 kg/m. By employing conditions such as a winding contact pressure of 5 to 60 kg/m, slit velocity of 100 to 500 m/min, oscillation velocity of 75 to 125 mm/min, and oscillation width of 10 to 400 mm, the air content in the film roll is preferably set to 0.1 to 8%. For achievement of the above-mentioned hardness of the inner layer, the tension taper is preferably 60 to 80%, more preferably 65 to 75%. By this, when the polypropylene film roll of the present invention is used as a dielectric body for a capacitor, excellent processability can be obtained for both vapor deposition and slitting in the capacitor production process and the vapor deposition process.

EXAMPLES

The present invention is described below in more detail by way of Examples. The following methods were used for measurement and evaluation of properties.

(1) Cold Xylene-soluble Portion (CXS)

In 100 mL of xylene at 135°C, 0.5 g of a polypropylene resin sample is dissolved, and the resulting solution is allowed to cool, followed by allowing recrystallization for 1 hour in a constant temperature bath at 20°C and then quantifying the polypropylene-based component dissolved in the filtrate by liquid chromatography (Xg). The precise amount value ($X_0$ g) for 0.5 g of the sample was used to perform calculation according to the following equation.

$$CXS\ (\%) = (X/X_0) \times 100$$

(2) Mesopentad Fraction (mmmm)

A polypropylene resin or a polypropylene film as a sample was dissolved in a solvent, and the mesopentad fraction (mmmm) was determined under the following conditions using $^{13}$C-NMR (reference: Polymer Analysis Handbook, New Edition. Koubunshi Bunseki Kenkyu Kondankai (Research Society of Polymer Analysis), The Japan Society for Analytical Chemistry (Ed.) 1995. P609-611).

A. Measurement Conditions

Apparatus: DRX-500, manufactured by Bruker
Measured nucleus: $^{13}$C nucleus (resonant frequency: 125.8 MHz)
Measurement Concentration: 10 wt%
Solvent: benzene / deuterated orthodichlorobenzene = mass ratio 1:3 mixed solution
Measurement temperature: 130°C
Spin rotation speed: 12 Hz
NMR sample tube: 5-mm tube
Pulse width: 45° (4.5 μs)
Pulse repeat time: 10 seconds
Data point: 64 K
Number of times of conversion: 10,000
Measurement mode: complete decoupling

B. Analysis Conditions

Fourier transformation was carried out with an LB (line-broadening factor) of 1.0, and the mmmm peak was set to 21.86 ppm. Using WINFIT software (manufactured by Bruker), peak separation is carried out. In this process, peak separation was carried out from peaks in the high magnetic field side as follows, and automatic fitting was carried out by attached software. After optimization of the peak separation, the total mmmm peak fraction was determined. The above measurement was carried out five times, and the average was used as the mesopentad fraction (mmmm) of the sample.

Peaks

(a) mrrm
(b) (c) rrrm (separated into two peaks)
(d) rrrr
(e) mrmr
(f) mrmm + rmrr
(g) mmrr
(h) rmmr
(i) mmmr
(j) mmmm

(3) Melt Flow Index (Melt Flow Rate: MFR)

Measurement was carried out according to Conditions M (230°C, 2.16 kg) of JIS K 7210 (1995). The unit of the melt flow index (melt flow rate: MFR) is g/10 minutes.

(4) Melt Tension (MS)

Measurement was carried out according to the apparatus for MFR measurement described in JIS K 7210 (1999). Using a melt tension tester manufactured by Toyo Seiki Seisaku-sho, Ltd., the resin sample was heated to 230°C, and the melt polymer was discharged at an extrusion rate of 15 mm/minute to form a strand. The tension required for receiving the strand at a rate of 6.5 m/minute was measured to determine the melt tension. Here, the unit of the melt tension is cN.

(5) Film Thickness

According to 7.4.1.1 of JIS C 2330 (2001), the thickness was measured by the micrometer method.

(6) Heat Shrinkage Rate at 80°C

For the longitudinal direction or the transverse direction of the polypropylene film, five samples, having a size of 200 mm in the measurement direction and 10 mm in the direction perpendicular to the measurement direction, were cut out, and positions 50 mm distant from both ends were marked to set the gauge length ($l_0$: 100 mm). Subsequently, each sample was suspended in an oven incubated at 80°C with a load of 3 g, and then heated for 15 minutes. The sample was then removed from the oven, and then cooled at room temperature. The length between the marks ($l_i$) was measured and applied to the following equation to perform calculation. The average from the five samples was calculated for each of the longitudinal direction and the transverse direction to provide the heat shrinkage rates of the biaxially oriented polypropylene film of the present invention.

$$\text{Heat shrinkage rate} = \{(l_0 - l_1) / l_0\} \times 100 \ (\%)$$

(7) Surface Wetting Tension

Measurement was carried out by a measurement method defined in JIS K 6768 (1999) using a mixed liquid of formaldehyde and ethylene glycol monoethyl ether.

(8) Arithmetic Average Roughness (SRa), Maximum Peak Height (SRp)

According to JIS B 0601 (1982), measurement was carried out using a noncontact three-dimensional microfigure measuring instrument (ET-30HK) and a three-dimensional roughness analyzer (MODEL SPA-11) manufactured by Kosaka Laboratory Ltd. The measurement was carried out for 10 arbitrary locations, and the arithmetic average roughness SRa, the maximum valley depth SRv, and the maximum peak height SRp were determined as the averages from those locations. Detail conditions for each measurement were as follows.

A. Measurement Conditions

Measurement surface treatment: the measurement surface was subjected to vacuum deposition of aluminum, and a noncontact method was employed.
Measurement direction: transverse direction of the film
Feeding rate in the transverse direction: 0.1 mm/second
Measurement area (transverse direction × longitudinal direction): 1.0 mm × 0.249 mm
Reference plane for the length in the height direction: LOWER (lower side)
Transverse direction sampling interval: 2 $\mu$m
Longitudinal direction sampling interval: 10 $\mu$m
Longitudinal direction sample number: 25 samples
Cutoff: 0.25 mm/second
Transverse direction magnification: 200-fold
Longitudinal direction magnification: 20,000-fold
Waviness, roughness cut: none

(9) Average Hardness, Variation of Hardness

Using a rubber hardness meter ASKER "Type C" manufactured by Kobunshi Keiki Co., Ltd., which is in accordance with the definition by JIS K 6301, the surface (outermost layer) of the polypropylene film roll excluding the 10-mm areas in both ends of the roll was evenly measured at seven points in the transverse direction, and the average was calculated. Regarding the inner layer of the roll, when the distance from the roll outermost layer to the core in the diameter direction was L, the roll was cut to the predetermined position, and the measured value was obtained by the same method as the method for the roll surface. In order to make the pressing pressure of the hardness meter constant, a load was applied to the hardness meter such that the weight including the weight of the hardness meter was 3.5 kg.

For the pressed surface in contact with the roll of the hardness meter, the measurement was carried out such that the longer side of the pressed surface was in parallel to the transverse direction of the roll. The variation of hardness is defined as the difference between the average hardness and the hardness most distant therefrom at each measurement point (the average hardness - the hardness most distant from the average hardness among the hardnesses at each measurement point).

(10) Air Leakage Index

Measurement was carried out using a Digi-Bekk Smoothness Tester manufactured by Toyo Seiki Seisaku-sho, Ltd. at 25°C at 65% RH. First, films whose one side is layered on the other side (5 cm × 5 cm, a hole with a diameter of 10 mm is formed on the film in the lower side) are placed on a sample table. The films are placed such that the center of the hole is positioned at the center of the sample table. A load of 0.2 kg/cm$^2$ is applied in this state, and the degree of vacuum to be reached is set to 383 mmHg. After reaching 383 mmHg, the vacuum pump automatically stops, and then air passes between the films to flow into the system, resulting in a decrease in the degree of vacuum. In this process, the time required for the change from 382 mmHg to 381 mmHg was measured. The measurement was carried out five times, and the average was used the air leakage index.

(11) Air Content (%)

The length of the outer circumference of the film roll is measured using a measuring tape with a dimensional accuracy of 10 $\mu$m, and the roll diameter is calculated based on the outer circumference. The measurement of the outer circumference is carried out for the entire width at intervals of 50 mm from a point located 5 mm inside from one of the roll ends. The average is used as the outer circumference. The air content is the value represented by the following equation.

$$\alpha = \{1 - t_1 L_R / ((d_1^2 - d_2^2)\pi/4)\} \times 100$$

$\alpha$: air content (%)
$t_1$: film thickness according to the weight method ($\mu$m)
$L_R$: roll length (m)
$d_1$: roll diameter (mm)
$d_2$: core diameter (mm)

(12) Processability into Element during Production of Capacitor (Element Winding Yield)

The film obtained in each of the later-mentioned Examples and Comparative Examples was processed using a resistance heating metal vapor deposition apparatus, wherein the pressure in the vacuum chamber was set to not more than 10$^{-4}$ Torr. The vacuum deposition of aluminum was carried out on one side of the polypropylene film such that the surface resistance was 2 $\Omega$/sq., followed by winding the film. In this process, the vapor deposition was carried out to form a stripe shape having margin portions running in the longitudinal direction (repeats in each of which the width of the vapor-deposited portion was 8.0 mm and the width of the margin portion was 1.0 mm).

The vapor-deposited film obtained as described above was slit into a tape shape having a width of 4.50 mm, with a margin portion having a width of 0.50 mm in the left or right side thereof. One left-margined and one right-margined vapor-deposited polypropylene films obtained were combined and wound to obtain a wound body. In this process, the two films were wound in positions shifted from each other such that each vapor-deposited portion protruded by 0.5 mm in the transverse direction. For the element winding, KAW-4NHB, manufactured by Kaido Manufacturing Co., Ltd., was used. After removal of the core, the wound body was subjected as it is to pressing at a temperature of 150°C and a pressure of 10 kg/cm$^2$ for 5 minutes to obtain a wound type capacitor element.

Ten capacitors were produced as described above while the process from the beginning of the winding and the completion of the winding was visually observed. Products showing wrinkles and/or displacement were regarded as products to be rejected, and the ratio of the number of the rejected products to the total number of products was expressed as a percentage to provide an index of the following processability (hereinafter referred to as element winding yield). The higher the element winding yield, the more preferred. Even in cases where no wrinkle or displacement was visually found, products were rejected when they showed occurrence of a displacement of not less than 0.75 mm in terms of the amount of displacement on the capacitor end face, or when the capacitor showed a width of not more than 4.25 mm. The amount of displacement on the capacitor end face herein means the difference (mm) between the width of the capacitor product and the reel film width before the winding.

<Element Winding Yield>

100%: Excellent
Not less than 90% and less that 100%: Good
Not less than 70% and less than 90%: Fair
Less than 70%: Poor

(13) Evaluation of Properties of Vapor-deposited Capacitor

The film obtained in each of the later-mentioned Examples and Comparative Examples was processed using a vacuum deposition apparatus manufactured by ULVAC Inc. to form a vapor deposition pattern with aluminum having a film resistance of 9 $\Omega$/sq. wherein the so-called T-type margin pattern was formed such that a margin portion was provided in the direction perpendicular to the longitudinal direction, to obtain a vapor-deposited reel having a width of 60 mm.

Subsequently, this reel was used to wind the capacitor element using an element winding apparatus (KAW-4NHB) manufactured by Kaido Manufacturing Co., Ltd., and the resulting product was subjected to metallikon, followed by heat treatment under reduced pressure at a temperature of 105°C for 10 hours and attachment of a lead wire, to finish a capacitor element. The resulting capacitor element had a capacitance of 5 $\mu$E

Using 10 capacitor elements obtained as described above, the so-called step-up test was carried out. In this test, a voltage of 100 V DC was applied to the capacitor element at a temperature of as high as 100°C, and the voltage was kept for 10 minutes, followed by gradually and repeatedly increasing the applied voltage at 50 V DC/1 minute in a stepwise manner. The capacitance changes measured in the test were plotted on a graph, and the voltage at which the capacitance became 70% relative to the initial value was divided by the film thickness according to the micrometer method (described above). The resulting value, which is the withstanding voltage (V/$\mu$m) of the capacitor, was rated according to the following standard. A product rated as "excellent" or "good" can be used without a problem, and a product rated as "fair" can be used depending on conditions. A product rated as "poor" causes a practical problem.

<Voltage Withstanding Properties>

Excellent: not less than 300 V/$\mu$m
Good: not less than 250 V/$\mu$m and less than 300 V/$\mu$m
Fair: not less than 200V/$\mu$m and less than 250V/$\mu$m
Poor: less than 200V/$\mu$m

(Example 1)

To a single-screw melt extruder, 100% by mass of a polypropylene resin (manufactured by Prime Polymer Co., Ltd.; melting point: 166°C; MFR: 2.5 g/10 minutes; mmmm: 0.991) was fed, and melt extrusion was carried out at 250°C, followed by removal of foreign bodies through a 25-$\mu$m-cut sintered filter. The molten sheet discharged from the T-die was allowed to adhere to a cooling drum whose surface temperature was controlled to 95°C, and allowed to be in contact with the cooling drum for 1.5 seconds, to obtain an unstretched sheet. For the adhesion of the molten sheet to the cooling drum, an air knife was used. Subsequently, preheating was carried out using a ceramic roll heated to 130°C, and the film was stretched 5.0-fold in the longitudinal direction. For the purpose of improving stretchability of the film, heat was applied from both sides of the stretched portion of the film using radiation heaters. By this, excellent film-forming properties were achieved without occurrence of film breakage during the longitudinal stretching. After the longitudinal stretching, the film was passed through a cooling roll at 30°C to cool the film to room temperature.

After the longitudinal stretching and cooling, radiation heaters were placed in both sides in front of the entrance of a tenter stretching machine. The distance between each radiation heater and the film was set to 6 mm, and the output of the radiation heater was set to 7 kW.

Subsequently, the end portions were gripped using clips, and the film was stretched 12-fold in the transverse direction at 160°C. Additional heat treatment was carried out at 160°C, and the film was relaxed in the transverse direction at 10%.

The film was then cooled in a cooling room. The cooling room was separated into three rooms. The cooling room temperature of cooling room 1 was kept at 120°C for not less than 1.1 seconds; the cooling room temperature of cooling room 2 was kept at 90°C for not less than 1.1 seconds; and the cooling room temperature of cooling room 3 was kept at 60°C for not less than 1.1 seconds.

After slow cooling to room temperature, one side of the film was subjected to corona discharge treatment at a treatment intensity of 25 W·min/m$^2$, and the edge portions of the film gripped by the clips were removed by cutting. The side subjected to the surface treatment is referred to as A side, and the untreated side is referred to as B side. The film after the removal of the end portions was wound by a winding machine to obtain an intermediate film roll having a thickness of 2.5 μm.

The intermediate film roll was slit using a slitter into a width of 620 mm and a length of 75,000 m under the following conditions: slit velocity, 400 m/min; oscillation velocity, 125 mm/min; oscillation width, 80 mm; unwinding tension, 6.0 kg/m; and, regarding winding conditions, winding tension, 6.5 kg/m; tension taper, 65%; and contact pressure, 45 kg/m. Physical properties of the obtained film are shown in Table 1.

(Example 2)

An intermediate film roll was obtained in the same manner as in Example 1 except that, after the longitudinal stretching and cooling, the distance between each radiation heater in front of the entrance of the tenter stretching machine and the film was set to 8 mm, and that the output of the radiation heater was set to 9 kW.

The intermediate film roll was slit using a slitter in the same manner as in Example 1 except, regarding winding conditions, that the winding tension was set to 3.0 kg/m, and that the tension taper was set to 75%, to obtain a polypropylene film roll having a thickness of 2.5 μm. Physical properties of the obtained film are shown in Table 1.

(Example 3)

A polypropylene film roll having a thickness of 2.5 μm was obtained by preparation in the same manner as in Example 1 except that, after the longitudinal stretching and cooling, the output of the radiation heater in front of the entrance of the tenter stretching machine was set to 10 kW. Physical properties of the obtained film are shown in Table 1.

(Example 4)

A polypropylene film roll having a thickness of 2.5 μm was obtained by preparation in the same manner as in Example 1 except that, after the longitudinal stretching and cooling, the output of the radiation heater in front of the entrance of the tenter stretching machine was set to 6 kW. Physical properties of the obtained film are shown in Table 1.

(Example 5)

A polypropylene film roll having a thickness of 2.5 μm was obtained by preparation in the same manner as in Example 1 except that, after the longitudinal stretching and cooling, the distance between each radiation heater in front of the entrance of the tenter stretching machine and the film was set to 10 mm. Physical properties of the obtained film are shown in Table 1.

(Example 6)

A polypropylene film roll having a thickness of 2.5 μm was obtained by preparation in the same manner as in Example 1 except that, after the longitudinal stretching and cooling, the distance between each radiation heater in front of the entrance of the tenter stretching machine and the film was set to 5 mm. Physical properties of the obtained film are shown in Table 1.

(Example 7)

A polypropylene film roll having a thickness of 2.5 μm was obtained by preparation in the same manner as in Example 1 except that the winding tension of the slitter was set to 7.5 kg/m. Physical properties of the obtained film are shown in Table 1.

(Example 8)

A polypropylene film roll having a thickness of 2.5 μm was obtained by preparation in the same manner as in Example 1 except that the winding tension of the slitter was set to 2.0 kg/m. Physical properties of the obtained film are shown in Table 1.

(Example 9)

A polypropylene film roll having a thickness of 2.5 $\mu$m was obtained by preparation in the same manner as in Example 1 except that the winding tension of the slitter was set to 8.0 kg/m. Physical properties of the obtained film are shown in Table 1.

(Example 10)

A polypropylene film roll having a thickness of 2.5 $\mu$m was obtained by preparation in the same manner as in Example 1 except that the winding tension of the slitter was set to 1.0 kg/m. Physical properties of the obtained film are shown in Table 1.

(Example 11)

A polypropylene film roll having a thickness of 2.5 $\mu$m was obtained by preparation in the same manner as in Example 1 except that the tension taper of the slitter was set to 60%. Physical properties of the obtained film are shown in Table 1.

(Example 12)

A polypropylene film roll having a thickness of 2.5 $\mu$m was obtained by preparation in the same manner as in Example 1 except that the retention time in each of cooling rooms 1, 2, and 3 was set to 0.6 seconds. Physical properties of the obtained film are shown in Table 1.

(Example 13)

A polypropylene film roll having a thickness of 2.5 $\mu$m was obtained by preparation in the same manner as in Example 1 except that the winding tension of the slitter was set to 7.5 kg/m and that the tension taper was set to 55%. Physical properties of the obtained film are shown in Table 2.

(Example 14)

A polypropylene film roll having a thickness of 2.5 $\mu$m was obtained by preparation in the same manner as in Example 1 except that the temperature of the cooling drum was set to 110°C. Physical properties of the obtained film are shown in Table 2.

(Comparative Example 1)

A polypropylene film roll having a thickness of 2.5 $\mu$m was obtained by preparation in the same manner as in Example 1 except that, after the longitudinal stretching and cooling, no radiation heater was placed in front of the entrance of the tenter stretching machine. Physical properties of the obtained film are shown in Table 2.

(Comparative Example 2)

A polypropylene film roll having a thickness of 2.5 $\mu$m was obtained by preparation in the same manner as in Example 1 except that, after the longitudinal stretching and cooling, the distance between each radiation heater in front of the entrance of the tenter stretching machine and the film was set to 4 mm. Physical properties of the obtained film are shown in Table 2.

(Comparative Example 3)

A polypropylene film roll having a thickness of 2.5 $\mu$m was obtained by preparation in the same manner as in Example 1 except that, after the longitudinal stretching and cooling, the output of the radiation heater in front of the entrance of the tenter stretching machine was set to 11 kW. Physical properties of the obtained film are shown in Table 2.

(Comparative Example 4)

A polypropylene film roll having a thickness of 2.5 $\mu$m was obtained by preparation in the same manner as in Example 1 except that the winding tension of the slitter was set to 0.8 kg/m. Physical properties of the obtained film are shown in Table 2.

(Comparative Example 5)

A polypropylene film roll having a thickness of 2.5 $\mu$m was obtained by preparation in the same manner as in Example 1 except that the winding tension of the slitter was set to 9.0 kg/m. Physical properties of the obtained film are shown in Table 2.

(Comparative Example 6)

A polypropylene film roll having a thickness of 2.5 $\mu$m was obtained by preparation in the same manner as in Example 1 except that the tension taper of the slitter was set to 50%. Physical properties of the obtained film are shown in Table 2.

(Comparative Example 7)

A polypropylene film roll having a thickness of 2.5 $\mu$m was obtained by preparation in the same manner as in Example 1 except that the tension taper of the slitter was set to 95%. Physical properties of the obtained film are shown in Table 2.

(Comparative Example 8)

A polypropylene film roll having a thickness of 2.5 $\mu$m was obtained by preparation in the same manner as in Example 1 except that the retention time in each of cooling rooms 1, 2, and 3 was set to 0.2 seconds. Physical properties of the obtained film are shown in Table 2.

[Table 1]

| | Unit | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Average Hardness of the | ° | 89 | 88.1 | 88.9 | 89 | 88.8 | 89.2 | 91.8 | 86.1 | 93.9 | 84.1 | 87.9 | 88.2 |
| Inner Layer Hardness | H(L/5)/H(0) | - | 1.01 | 1.01 | 1.01 | 1.01 | 1.01 | 1.01 | 1.01 | 1.01 | 1.01 | 1.01 | 1.02 | 1.01 |
| | H(2L/5)/H(L/5) | - | 1.01 | 1.01 | 1.01 | 1.01 | 1.01 | 1.01 | 1.01 | 1.01 | 1.01 | 1.01 | 1.02 | 1.01 |
| | H(3L/5)/H(2L/5) | - | 1.01 | 1.01 | 1.01 | 1.01 | 1.01 | 1.01 | 1.01 | 1.01 | 1.01 | 1.01 | 1.02 | 1.01 |
| | H(4L/5)/H(3L/5) | - | 1.01 | 1.01 | 1.01 | 1.01 | 1.01 | 1.01 | 1.01 | 1.01 | 1.01 | 1.01 | 1.02 | 1.01 |
| Hardness Variation of the | ° | 0.2 | 0 | 1.4 | 1.9 | 1.2 | -1.6 | 0.4 | 0.3 | -0.4 | 0.5 | -0.6 | -1.3 |
| Hardness Variation of Inner Layer in Width Direction | L/5 | ° | 0 | 0.2 | 1.2 | 1.1 | -1.1 | 1.3 | -0.2 | -0.2 | 0.6 | -0.3 | -0.3 | 1.4 |
| | 2L/5 | ° | 0.2 | 0 | 1.1 | -1.3 | -1 | 1.2 | 0.3 | 0.4 | 0.4 | -0.4 | 0.4 | -1.3 |
| | 3L/5 | ° | -0.2 | -0.3 | 0.5 | -1.1 | 1.3 | 1.6 | 0.4 | 0.3 | -0.5 | -0.3 | 0.5 | 0.8 |
| | 4L/5 | ° | 0 | 0 | 0.6 | -1.3 | 1.1 | -1.1 | -0.2 | -0.1 | -0.4 | -0.3 | -0.3 | -0.7 |
| Maximum Peak Height | SRp (A side) | μm | 0.6 | 1.2 | 1.5 | 0.4 | 0.5 | 1.9 | 0.6 | 0.9 | 0.8 | 1 | 1.4 | 1.3 |
| | SRp (B side) | μm | 0.7 | 1.4 | 1.6 | 0.4 | 0.5 | 2 | 0.7 | 0.8 | 0.9 | 1.2 | 1.3 | 1.4 |
| Heat Shrinkage Rate at 80°C | Longitudinal Direction | % | 1.1 | 1 | 0.8 | 1.1 | 0.8 | 1 | 0.9 | 0.9 | 1 | 1.1 | 0.8 | 1.6 |
| | Width Direction | % | 0.1 | 0.2 | -0.1 | 0.1 | 0.2 | -0.2 | -0.1 | 0.1 | -0.2 | -0.1 | -0.3 | -0.5 |
| Air Leak Index | sec. | 550 | 310 | 240 | 1300 | 880 | 140 | 620 | 460 | 490 | 390 | 340 | 320 |
| Air Content | % | 2.1 | 2.8 | 1.7 | 2.6 | 2.5 | 1.5 | 1.4 | 4.3 | 0.9 | 7.1 | 2.5 | 1.7 |
| Surface Roughness | Sra (A side) | μm | 0.02 | 0.03 | 0.04 | 0.04 | 0.02 | 0.04 | 0.02 | 0.03 | 0.02 | 0.02 | 0.03 | 0.03 |
| | Sra (B side) | μm | 0.03 | 0.04 | 0.05 | 0.04 | 0.03 | 0.05 | 0.03 | 0.04 | 0.03 | 0.03 | 0.02 | 0.02 |
| Film Thickness | μm | 2.5 | 2.5 | 2.5 | 2.5 | 2.5 | 2.5 | 2.5 | 2.5 | 2.5 | 2.5 | 2.5 | 2.5 |

(continued)

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Distance from the Outermost Layer of Roll to the Roll Core in Diameter Direction L | mm | 175 | 175 | 175 | 175 | 175 | 175 | 175 | 175 | 175 | 175 | 175 | 175 |
| Film Length | m | 75000 | 75000 | 75000 | 75000 | 75000 | 75000 | 75000 | 75000 | 75000 | 75000 | 75000 | 75000 |
| Film Width | mm | 620 | 620 | 620 | 620 | 620 | 620 | 620 | 620 | 620 | 620 | 620 | 620 |
| Element Winding Yield | | Excellent | Excellent | Good | Good | Good | Good | Good | Good | Good | Good | Good | Good |
| Voltage Resistance Performance | | Excellent | Excellent | Good | Excellent | Excellent | Good | Excellent | Excellent | Excellent | Excellent | Excellent | Excellent |

[Table 2]

| | | Example 13 | Example 14 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Average Hardness of the | ° | 89.0 | 89.3 | 89.2 | 89.0 | 88.2 | 81.1 | 95.1 | 83.9 | 94.1 | 88.2 |
| Inner Layer Hardness — H(L/5)/H(0) | - | 1.02 | 1.01 | 1.01 | 1.01 | 1.01 | 1.01 | 1.01 | 1.03 | 1.00 | 1.01 |
| H(2L/5)/H(L/5) | - | 1.03 | 1.01 | 1.01 | 1.01 | 1.01 | 1.01 | 1.01 | 1.02 | 1.00 | 1.01 |
| H(3L/5)/H(2L/5) | - | 1.02 | 1.01 | 1.01 | 1.01 | 1.01 | 1.01 | 1.01 | 1.03 | 1.01 | 1.01 |
| H(4L/5)/H(3L/5) | - | 1.03 | 1.01 | 1.01 | 1.01 | 1.01 | 1.01 | 1.01 | 1.03 | 1.01 | 1.01 |
| Hardness Variation of the Outermost Layer in Width | ° | -0.7 | 0.8 | 2.1 | -2.2 | -2.1 | 0.6 | -0.5 | 0.6 | -0.8 | -2.3 |
| Hardness Variation of Inner Layer in Width Direction — L/5 | ° | 0.8 | 1.1 | 1.6 | 1.6 | 2.2 | -0.9 | -0.5 | 0.8 | -0.9 | 2.4 |
| 2L/5 | ° | -0.7 | -1.1 | 1.7 | 1.8 | 2.1 | 0.6 | 0.8 | -0.3 | 0.9 | 2.1 |
| 3L/5 | ° | 0.6 | 0.9 | 2.3 | -1.6 | -2.1 | -0.4 | 0.7 | 0.5 | 0.7 | -2.2 |
| 4L/5 | ° | 0.8 | -0.7 | 2.2 | 2.1 | 2.5 | -0.8 | -0.9 | 0.4 | 0.3 | 1.3 |
| Maximum Peak Height — SRp (A side) | μm | 0.7 | 1.5 | 0.3 | 2.1 | 2.2 | 0.6 | 1.0 | 1.1 | 1.2 | 1.5 |
| SRp (B side) | μm | 0.8 | 1.3 | 0.3 | 2.4 | 2.3 | 0.8 | 1.2 | 1.2 | 1.3 | 1.6 |
| Heat Shrinkage Rate at 80°C — Longitudinal Direction | % | 1.0 | 1.0 | 1.2 | 1.1 | 0.9 | 0.8 | 1.0 | 0.9 | 1.0 | 2.2 |
| Width Direction | % | 0.2 | 0.1 | 0.1 | -0.1 | 0.3 | -0.2 | 0.1 | -0.1 | -0.2 | -0.7 |
| Air Leak Index | sec. | 450 | 210 | 1800 | 30 | 50 | 570 | 410 | 380 | 400 | 290 |
| Air Content | % | 1.7 | 1.4 | 3.6 | 0.9 | 0.9 | 8.1 | 0.5 | 5.1 | 0.8 | 0.9 |
| Surface Roughness — Sra (A side) | μm | 0.03 | 0.06 | 0.02 | 0.07 | 0.06 | 0.02 | 0.02 | 0.02 | 0.03 | 0.03 |
| Sra (B side) | μm | 0.02 | 0.06 | 0.04 | 0.09 | 0.07 | 0.03 | 0.02 | 0.03 | 0.04 | 0.04 |
| Film Thickness | μm | 2.5 | 2.5 | 2.5 | 2.5 | 2.5 | 2.5 | 2.5 | 2.5 | 2.5 | 2.5 |

(continued)

| | | Example 13 | Example 14 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Distance from the Outermost Roll Layer to the Roll Core in Diameter Direction L | mm | 175 | 175 | 175 | 175 | 175 | 175 | 175 | 175 | 175 | 175 |
| Film Length | m | 75000 | 75000 | 75000 | 75000 | 75000 | 75000 | 75000 | 75000 | 75000 | 75000 |
| Film Width | mm | 620 | 620 | 620 | 620 | 620 | 620 | 620 | 620 | 620 | 620 |
| Element Winding Yield | | Fair | Good | Failure | Failure | Failure | Failure | Failure | Failure | Failure | Failure |
| Voltage Resistance Performance | | Excellent | Fair | Excellent | Failure | Failure | Excellent | Excellent | Excellent | Excellent | Good |

INDUSTRIAL APPLICABILITY

With the polypropylene film roll of the present invention, in use for a capacitor, especially in preparation of a vapor-deposited capacitor, troubles such as winding displacement or longitudinal wrinkles in the film roll during the vapor deposition process, or meandering or wrinkles during conveyance, can be prevented. Further, for production of capacitors, a polypropylene film roll for a capacitor showing excellent processability can be provided.

**Claims**

1. A polypropylene film roll comprising a polypropylene film wound around a core, the film roll having a roll outermost layer having an average hardness of 84.0 to 94.0°, the roll outermost layer having a variation of hardness within ±2.0° in a transverse direction, wherein the average hardness is measured using a rubber hardness meter in accordance with JIS K 6301 , wherein the surface, which is the outermost layer of the film roll, is measured at seven points in the transverse direction, and the average is calculated, and wherein the variation of hardness is defined as the difference between the average hardness and the hardness most distant therefrom at each measurement point, wherein the average hardness and the variation of hardness are measured according to the description.

2. The polypropylene film roll according to claim 1, wherein at least one side of the polypropylene film has a maximum peak height SRp, measured in accordance with JIS B 0601 (1982) following the methodology according to the description, of 0.4 to 2.0 μm.

3. The polypropylene film roll according to claim 1 or 2,
   wherein, when a distance from the roll outermost layer to the core in a diameter direction is L, and when average hardnesses in a roll transverse direction at distances from the roll outermost layer of 0, L/5, 2L/5, 3L/5, and 4L/5 are H(0), H(L/5), H(2L/5), H(3L/5), and H(4L/5), respectively, Formulae (1) to (4):

$$1.00 < H(L/5)/H(0) \le 1.02 \qquad \text{Formula (1)};$$

$$1.00 < H(2L/5)/H(L/5) \le 1.02 \qquad \text{Formula (2)};$$

and

$$1.00 < H(3L/5)/H(2L/5) \le 1.02 \qquad \text{Formula (3)};$$

$$1.00 < H(4L/5)/H(3L/5) \le 1.02 \qquad \text{Formula (4)};$$

   are satisfied; and
   wherein variations of hardness in a transverse direction at sites of L/5, 2L/5, 3L/5, and 4L/5 from the roll outermost layer are within ±2.0°.

4. The polypropylene film roll according to any one of claims 1 to 3, wherein the distance from the roll outermost layer to the core in the diameter direction, L, is 20 to 300 mm.

5. The polypropylene film roll according to any one of claims 1 to 4, wherein the polypropylene film has heat shrinkage rates at 80°C of 0.4 to 2.0% in a longitudinal direction and -0.5 to 0.5% in a transverse direction, wherein in order to determine the heat shrinkage rates each sample is suspended at 80°C and subsequently cooled at room temperature, wherein then the length ($l_1$) changed from ($l_0$: 100 mm) is measured and applied to the following equation to perform calculation:

$$\text{Heat shrinkage rate} = \{(l_0 - l_1) / l_0\} \times 100 \ (\%)$$

wherein the heat shrinkage rate at 80 °C is measured according to the description.

6. The polypropylene film roll according to any one of claims 1 to 5, having an air leakage index of 100 to 1500 seconds when one side is layered on another side, wherein the leakage index is the time required for the degree of vacuum between the films to change from 382 mmHg to 381 mmHg, wherein the air leakage index is measured according to the description.

7. The polypropylene film roll according to any one of claims 1 to 6, having an air content of 0.1 to 8.0%, wherein the air content is the value represented by the following equation:

$$\alpha = \{1 - t_1 L_R/((d_1{}^2 - d_2{}^2)\pi/4)\} \times 100$$

with: $\alpha$: air content (%)
$t_1$: film thickness according to the weight method ($\mu$m)
$L_R$: roll length (m), which corresponds to the film length
$d_1$: roll diameter (mm)
$d_2$: core diameter (mm),
wherein the air content is measured according to the description.

8. The polypropylene film roll according to any one of claims 1 to 7, wherein at least one surface of the polypropylene film has a surface roughness (central surface average roughness), SRa, measured in accordance with JIS B 0601 (1982) following the methodology according to the description, of 0.01 to 0.05 $\mu$m.

9. The polypropylene film roll according to any one of claims 1 to 8, having a film thickness of 0.5 to 7.0 $\mu$m according to a micrometer method in accordance with JIS C 2330 (2001).

10. The polypropylene film roll according to any one of claims 1 to 9, having a film length of not less than 20,000 m.

11. The polypropylene film roll according to any one of claims 1 to 10, having a film width of 500 mm to 1,050 mm.

12. Use of the polypropylene film roll according to any one of claims 1 to 11 for a capacitor.


**Patentansprüche**

1. Polypropylenfilmrolle, die einen Polypropylenfilm aufweist, der um einen Kern gewickelt ist, wobei die Filmrolle eine äußerste Rollenschicht mit einer durchschnittlichen Härte von 84,0 bis 94,0° hat, die äußerste Rollenschicht eine Variation der Härte innerhalb von ±2,0° in einer Querrichtung hat, wobei die durchschnittliche Härte unter Verwendung eines Gummihärtemessers gemäß JIS K 6301 gemessen wird, wobei die Oberfläche, die die äußerste Schicht der Filmrolle ist, an sieben Punkten in der Querrichtung gemessen wird, und der Durchschnitt berechnet wird, und wobei die Variation der Härte als die Differenz zwischen der durchschnittlichen Härte und der davon am weitesten entfernten Härte an jedem Messpunkt definiert ist, wobei die durchschnittliche Härte und die Variation der Härte gemäß der Beschreibung gemessen werden.

2. Polypropylenfilmrolle nach Anspruch 1, wobei mindestens eine Seite des Polypropylenfilms eine maximale Peakhöhe SRp von 0,4 bis 2,0 $\mu$m hat, gemessen gemäß JIS B 0601 (1982) nach der Methode gemäß der Beschreibung.

3. Polypropylenfilmrolle nach Anspruch 1 oder 2,
wobei, wenn ein Abstand von der äußersten Rollenschicht zum Kern in einer Durchmesserrichtung L ist, und wenn durchschnittliche Härten in einer Rollenquerrichtung in Abständen von der äußersten Rollenschicht von 0, L/5, 2L/5, 3L/5, und 4L/5 H(0), H(L/5), H(2L/5), H(3L/5) bzw. H(4L/5) sind, Formeln (1) bis (4):

$$1,00 < H(L/5)/H(0) \le 1,02 \qquad \text{Formel (1);}$$

$$1,00 < H(2L/5)/H(L/5) \le 1,02 \qquad \text{Formel (2);}$$

$$1,00 < H(3L/5)/H(2L/5) \leq 1,02 \qquad \text{Formel (3);}$$

und

$$1,00 < H(4L/5)/H(3L/5) \leq 1,02 \qquad \text{Formel (4);}$$

erfüllt sind; und

wobei Variationen der Härte in einer Querrichtung an Stellen von L/5, 2L/5, 3L/5, und 4L/5 von der äußersten Rollenschicht innerhalb von $\pm 2,0°$ liegen.

4. Polypropylenfilmrolle nach einem der Ansprüche 1 bis 3, wobei der Abstand von der äußersten Rollenschicht zum Kern in der Durchmesserrichtung L 20 bis 300 mm beträgt.

5. Polypropylenfilmrolle nach einem der Ansprüche 1 bis 4, wobei der Polypropylenfilm bei 80 °C Wärmeschrumpfraten von 0,4 bis 2,0% in einer Längsrichtung und -0,5 bis 0,5% in einer Querrichtung hat, wobei, um die Wärmeschrumpfraten zu bestimmen, jede Probe bei 80 °C suspendiert und anschließend auf Raumtemperatur abgekühlt wird, wobei dann die von ($l_0$: 100 mm) geänderte Länge ($l_1$) gemessen wird und auf die folgende Gleichung angewendet wird, um die Berechnung durchzuführen:

$$\text{Wärmeschrumpfrate} = \{(l_0 - l_1)/l_0\} \times 100 \ (\%)$$

wobei die Wärmeschrumpfrate bei 80 °C gemäß der Beschreibung gemessen wird.

6. Polypropylenfilmrolle nach einem der Ansprüche 1 bis 5 mit einem Luftleckindex von 100 bis 1500 Sekunden, wenn eine Seite auf eine weitere Seite geschichtet ist, wobei der Leckindex die Zeit ist, die benötigt wird, um den Vakuumgrad zwischen den Filmen von 382 mmHg auf 381 mmHg ändern, wobei der Luftleckindex gemäß der Beschreibung gemessen wird.

7. Polypropylenfilmrolle nach einem der Ansprüche 1 bis 6 mit einem Luftgehalt von 0,1 bis 8,0%, wobei der Luftgehalt der Wert ist, der durch die folgende Gleichung dargestellt ist:

$$\alpha = \{1 - t_1 L_R/((d_1{}^2 - d_2{}^2)\pi/4)\} \times 100$$

mit: $\alpha$: Luftgehalt (%)
$t_1$: Filmdicke nach der Gewichtsmethode ($\mu$m)
$L_R$: Rollenlänge (m), die der Filmlänge entspricht
$d_1$: Rollendurchmesser (mm)
$d_2$: Kerndurchmesser (mm),
wobei der Luftgehalt gemäß der Beschreibung gemessen wird.

8. Polypropylenfilmrolle nach einem der Ansprüche 1 bis 7, wobei mindestens eine Oberfläche des Polypropylenfilms eine Oberflächenrauheit (zentrale Oberflächendurchschnittsrauheit) SRa von 0,01 bis 0,05 $\mu$m hat, gemessen gemäß JIS B 0601 (1982) nach der Methode gemäß der Beschreibung.

9. Polypropylenfilmrolle nach einem der Ansprüche 1 bis 8 mit einer Filmdicke von 0,5 bis 7,0 $\mu$m gemäß einem Mikrometer-Verfahren gemäß JIS C 2330 (2001).

10. Polypropylenfilmrolle nach einem der Ansprüche 1 bis 9 mit einer Filmlänge von nicht weniger als 20.000 m.

11. Polypropylenfilmrolle nach einem der Ansprüche 1 bis 10 mit einer Filmbreite von 500 mm bis 1.050 mm.

12. Verwendung der Polypropylenfilmrolle nach einem der Ansprüche 1 bis 11 für einen Kondensator.

**Revendications**

1. Rouleau de film de polypropylène comprenant un film de polypropylène enroulé autour d'un noyau, le rouleau de film ayant une couche la plus externe de rouleau ayant une dureté moyenne comprise entre 84,0 et 94,0°, la couche la plus externe de rouleau ayant une variation de dureté de ± 2,0° dans une direction transversale, où la dureté moyenne est mesurée en utilisant un appareil de mesure de la dureté du caoutchouc conformément à la norme JIS K 6301, où la surface, qui est la couche la plus externe du rouleau de film, est mesurée à sept points dans la direction transversale, et la moyenne est calculée, et où la variation de la dureté est définie comme la différence entre la dureté moyenne et la dureté la plus éloignée de celle-ci à chaque point de mesure, où la dureté moyenne et la variation de dureté sont mesurées selon la description.

2. Rouleau de film de polypropylène selon la revendication 1, dans lequel au moins un côté du film de polypropylène a une hauteur maximale de pic SRp, mesurée conformément à la norme JIS B 0601 (1982) suivant la méthodologie selon la description, comprise entre 0,4 et 2,0 μm.

3. Rouleau de film de polypropylène selon la revendication 1 ou 2, dans lequel, lorsqu'une distance allant de la couche la plus externe de rouleau au noyau dans une direction de diamètre est L, et lorsque les duretés moyennes dans une direction transversale de rouleau à des distances de la couche la plus externe de rouleau de 0, L/5, 2L/5, 3L/5 et 4L/5 sont H(0), H(L/5), H(2L/5), H(3L/5), et H(4L/5), respectivement, les formules (1) à (4) :

$$1{,}00 < H(L/5)/H(0) \leq 1{,}02 \qquad \text{Formule (1) ;}$$

$$1{,}00 < H(2L/5)/H(L/5) \leq 1{,}02 \qquad \text{Formule (2) ;}$$

$$1{,}00 < H(3L/5)/H(2L/5) \leq 1{,}02 \qquad \text{Formule (3) ;}$$

et

$$1{,}00 < H(4L/5)/H(3L/5) \leq 1{,}02 \qquad \text{Formule (4) ;}$$

sont satisfaites ; et
où les variations de dureté dans une direction transversale aux sites de L/5, 2L/5, 3L/5, et 4L/5 de la couche la plus externe de rouleau sont à ± 2,0°.

4. Rouleau de film de polypropylène selon l'une quelconque des revendications 1 à 3, dans lequel la distance allant de la couche la plus externe de rouleau au noyau dans la direction de diamètre, L, est comprise entre 20 et 300 mm.

5. Rouleau de film de polypropylène selon l'une quelconque des revendications 1 à 4, dans lequel le film de polypropylène a des taux de rétrécissement thermique à 80°C compris entre 0,4 et 2,0% dans une direction longitudinale et entre -0,5 et 0,5% dans une direction transversale, où afin de déterminer les taux de rétrécissement thermique, chaque échantillon est suspendu à 80°C puis refroidi à température ambiante, où alors la longueur ($l_1$) changée de ($l_0$: 100 mm) est mesurée et appliquée à l'équation suivante pour effectuer le calcul :

$$\text{Taux de rétrécissement thermique} = \{(l_0 - l_1)/l_0\} \times 100 \ (\%)$$

où le taux de rétrécissement thermique à 80°C est mesuré selon la description.

6. Rouleau de film de polypropylène selon l'une quelconque des revendications 1 à 5, ayant un indice de fuite d'air compris entre 100 et 1500 secondes lorsqu'un côté est déposé sur un autre côté, dans lequel l'indice de fuite est le temps nécessaire pour que le degré de vide entre les films change de 382 mmHg à 381 mmHg, où l'indice de fuite d'air est mesuré selon la description.

**7.** Rouleau de film de polypropylène selon l'une quelconque des revendications 1 à 6, ayant une teneur en air comprise entre 0,1 et 8,0%, dans lequel la teneur en air est la valeur représentée par l'équation suivante :

$$\alpha = \{1 - t_1 L_R/((d_1^2 - d_2^2)\pi/4)\} \times 100$$

avec : $\alpha$ : teneur en air (%)
$t_1$: épaisseur de film selon la méthode de pondération ($\mu$m)
$L_R$ : longueur de rouleau (m), qui correspond à la longueur de film
$d_1$ : diamètre de rouleau (mm)
$d_2$ : diamètre de noyau (mm),
où la teneur en air est mesurée selon la description.

**8.** Rouleau de film de polypropylène selon l'une quelconque des revendications 1 à 7, dans lequel au moins une surface du film de polypropylène a une rugosité de surface (rugosité moyenne de surface centrale), SRa, mesurée conformément à la norme JIS B 0601 (1982) suivant la méthodologie selon la description, comprise entre 0,01 et 0,05 $\mu$m.

**9.** Rouleau de film de polypropylène selon l'une quelconque des revendications 1 à 8, ayant une épaisseur de film comprise entre 0,5 et 7,0 $\mu$m conformément à une méthode de micromètre selon la norme JIS C 2330 (2001).

**10.** Rouleau de film de polypropylène selon l'une quelconque des revendications 1 à 9, ayant une longueur de film d'au moins 20000 m.

**11.** Rouleau de film de polypropylène selon l'une quelconque des revendications 1 à 10, ayant une largeur de film comprise entre 500 mm et 1050 mm.

**12.** Utilisation du rouleau de film de polypropylène selon l'une quelconque des revendications 1 à 11 pour un condensateur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006273997 A
- JP 2015195367 A
- JP 62121704 A
- JP 2869606 B

**Non-patent literature cited in the description**

- Koubunshi Bunseki Kenkyu Kondankai (Research Society of Polymer Analysis). Polymer Analysis Handbook. 1995, 609-611